# EUROPEAN PATENT APPLICATION

(11) **EP 4 350 845 A1**
(43) Date of publication of application: **10.04.2024**
(21) Application number: 22815909.1
(22) Date of filing: 24.05.2022
(51) Int. Cl.: H01M 10/6568, H01M 10/613, H01M 10/617, H01M 10/625, H01M 10/6556, H01M 10/663

(54) **BATTERY COOLING UNIT AND BATTERY COOLING SYSTEM**

(30) Priority: 31.05.2021 JP 2021090797
(71) Applicant: Valeo Japan Co., Ltd., Kumagaya-Shi SAITAMA 360-0193 (JP)
(72) Inventor: TAKANO, Akihiko, Kumagaya-shi Saitama 360-0193 (JP)
(74) Representative: Valeo Systèmes Thermiques
(86) International application number: PCT/JP2022/021192
(87) International publication number: WO 2022/255159

(57) **Abstract**

Provided is a battery cooling technique capable of cooling an entire battery.

A battery cooling unit (40; 40A; 40B; 40C; 40D) includes: an inlet (41) through which a heat medium flows in; an outlet (42) through which the heat medium flows out; a plurality of heat exchange portions (51 to 54) thermally connected to a battery (Ba); and a distribution flow path (60) configured to distribute the heat medium flowing in from the inlet (41) to the plurality of heat exchange portions (51 to 54). The distribution flow path (60) includes a branch portion (61 to 63) configured to branch into an introduction path (71 to 73) through which a part of the heat medium flowing in from the inlet (41) flows toward an upstream heat exchange portion (51 to 53) and a bypass path (66) that bypasses the upstream heat exchange portion (51 to 53), and a join portion (81 to 83) configured to join a part or all of the heat medium flowing through the bypass path (66) with the heat medium flowing through the upstream heat exchange portion (51 to 53) and flow the joined heat medium to a downstream heat exchange portion (52 to 54).

## Description

### Technical Field

The present invention relates to a battery cooling unit that cools a battery, and a battery cooling system on which the battery cooling unit is mounted.

### Background Art

For example, a battery mounted on a vehicle has a high temperature during operation. From a viewpoint of extending a service life of a battery, it is desirable to cool the battery having a high temperature. In the related art for cooling a battery having a high temperature, there is a technique disclosed in PTL 1.

In a battery cooling unit disclosed in PTL 1, a plurality of heat exchangers are provided in series to be in contact with a battery, a heat medium sequentially flows inside the heat exchangers, and the battery is cooled by heat exchange with the heat medium.

### Citation List

### Patent Literature

PTL 1: JP2011-134659A

### Summary of Invention

### Technical Problem

In the battery cooling unit disclosed in PTL 1, when a flow direction of the heat medium is used as a reference, the heat medium receives heat from the battery as the heat medium flows from upstream to downstream, and thus heat exchange performance decreases. The battery may not be sufficiently cooled at a portion where the heat exchange performance is decreased.

An object of the invention is to provide a battery cooling technique capable of cooling an entire battery.

### Solution to Problem

In the following description, reference numerals in the accompanying drawings are appended in parentheses to facilitate understanding of the invention, but the invention is not limited to illustrated embodiments.

According to one aspect of the invention, a battery cooling unit (40; 40A; 40B; 40C; 40D) capable of cooling a battery (Ba) by a heat medium is provided. The battery cooling unit (40; 40A; 40B; 40C; 40D) includes:
an inlet (41) through which the heat medium flows in from an outside of the battery cooling unit (40; 40A; 40B; 40C; 40D);
an outlet (42) through which the heat medium flows out to the outside of the battery cooling unit (40; 40A; 40B; 40C; 40D);
a plurality of heat exchange portions (51 to 54) thermally connected to the battery (Ba); and
a distribution flow path (60) configured to distribute the heat medium flowing in from the inlet (41) to the plurality of heat exchange portions (51 to 54), wherein
when any two of the heat exchange portions (51 to 54) among the heat exchange portions (51 to 54) are defined as an upstream heat exchange portion (51 to 53) and a downstream heat exchange portion (52 to 54) disposed downstream of the upstream heat exchange portions (51 to 53), with reference to a flow direction of the heat medium,
the distribution flow path (60) includes
   a branch portion (61 to 63) configured to branch into an introduction path (71 to 73) through which a part of the heat medium flowing in from the inlet (41) flows toward the upstream heat exchange portions (51 to 53) and a bypass path (66) that bypasses the upstream heat exchange portions (51 to 53), and
   a join portion (81 to 83) configured to join a part or all of the heat medium flowing through the bypass path (66) with the heat medium flowing through the upstream heat exchange portions (51 to 53) and flow the joined heat medium to the downstream heat exchange portions (52 to 54).

Further, according to another aspect of the invention, a battery cooling unit (40; 40B; 40C) capable of cooling a battery (Ba) by a heat medium is provided. The battery cooling unit (40; 40B; 40C) includes:
an inlet (41) through which a heat medium flows in from an outside of the battery cooling unit (40; 40B; 40C);
an outlet (42) through which the heat medium flows out to the outside of the battery cooling unit (40; 40B; 40C); and
a distribution flow path (60) configured to distribute to a plurality of heat exchange portions (51 to 54) thermally connected to the battery (Ba), wherein
when the number of heat exchange portions (51 to 54) provided is N, the first heat exchange portion (51) and the second heat exchange portion (52) up to the Nth heat exchange portion (54) are disposed in an order from upstream to downstream, with reference to a flow direction of the heat medium,
the distribution flow path (60) includes
   a first branch portion (61 to 63) configured to branch into a first introduction path (71 to 73) through which a part of the heat medium flowing in from the inlet (41) flows toward the first heat exchange portion (51) and a bypass path (66) that bypasses the first heat exchange portion (51), and
   (N-1) join portions (81 to 83) from the first join portion (81), the first join portion (81) being configured to join a part of the heat medium flowing through the bypass path (66) with the heat medium flowing through the first heat exchange portion (51) and flow the joined heat medium to the second heat exchange portion (52), to the (N-1)th join portion (83), the (N-1)th join portion (83) being configured to join all of the heat medium flowing through the bypass path (66) with the heat medium flowing through the (N-1)th heat exchange portion (53) and flow the joined heat medium to the Nth heat exchange portion (54).

### Advantageous Effects of Invention

The invention can provide a battery cooling technique capable of cooling an entire battery.

### Brief Description of Drawings

[FIG. 1] FIG. 1 is a schematic diagram of a battery cooling system on which a battery cooling unit according to Embodiment 1 is mounted.
[FIG. 2] FIG. 2 is a diagram illustrating the battery cooling unit shown in FIG. 1.
[FIG. 3] FIG. 3 is a diagram illustrating a battery cooling unit according to Embodiment 2.
[FIG. 4] FIG. 4 is a diagram illustrating a battery cooling unit according to Embodiment 3.
[FIG. 5] FIG. 5 is a diagram illustrating a battery cooling unit according to Embodiment 4.
[FIG. 6] FIG. 6 is a diagram illustrating a battery cooling unit according Embodiment 5.

### Description of Embodiments

Embodiments of the invention will be described below based on the accompanying drawings.

### <Embodiment 1>

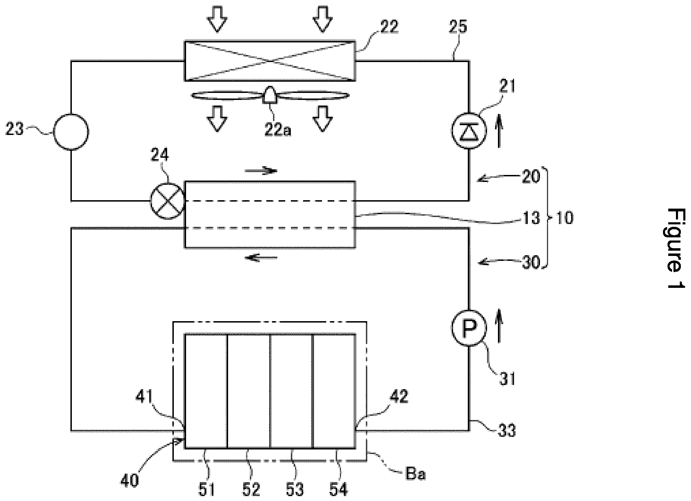

Reference is made to FIG. 1. A battery cooling system 10 is mounted on, for example, a vehicle using a motor as a driving source, and is used to cool a battery Ba. The battery Ba is used to operate the motor. The number of batteries Ba to be cooled may be one or two or more.

The battery cooling system 10 includes a refrigeration cycle 20 in which a refrigerant circulates, a cooling water cycle 30 which is thermally coupled to the refrigeration cycle 20 and in which cooling water circulates, and a chiller 13 which thermally couples the refrigeration cycle 20 and the cooling water cycle 30 and performs heat exchange between the refrigerant and the cooling water.

The refrigeration cycle 20 includes a compressor 21 that compresses and discharges the refrigerant heated in the chiller 13, a radiator 22 that radiates heat of the refrigerant discharged from the compressor 21, a receiver tank 23 that stores liquid refrigerant in the radiator 22, and a decompression device 24 that decompresses the refrigerant flowing out from the radiator 22 and flows the refrigerant to the chiller 13.

Further, the refrigeration cycle 20 may include an accumulator (not shown) between the chiller 13 and the compressor 21 instead of the receiver tank 23. Further, the receiver tank 23 may be provided integrally with the radiator 22.

The compressor 21, the radiator 22, the receiver tank 23, and the decompression device 24 are connected to each other via a refrigerant flow path 25 through which the refrigerant flows. The refrigerant circulates in the refrigerant flow path 25.

The refrigeration cycle 20 may include, for example, a branch circuit (not shown) to cool an interior of the vehicle.

In a vicinity of the radiator 22, for example, a fan 22a for forcibly causing air to flow and promoting heat radiation of the refrigerant can be provided.

The chiller 13 serves as a heat exchanger that cools the cooling water circulating through the cooling water cycle 30.

The cooling water cycle 30 includes a pump 31 that pumps the cooling water, and a battery cooling unit 40 (hereinafter, abbreviated as "cooling unit 40") into which the water cooled in the chiller 13 flows to cool the battery Ba.

The pump 31 and the battery cooling unit 40 are connected via a cooling water flow path 33 through which the cooling water can flow. The cooling water circulates through the pump 31 and the battery cooling unit 40.

Further, the battery Ba can be cooled by a refrigerant or an oil in addition to the cooling water. The cooling water, the refrigerant, and the oil may be referred to as a heat medium for cooling the battery Ba.

Further, when the cooling water is used as the heat medium, it is preferable that a component of antifreeze liquid such as ethylene glycol or a rust preventive component is mixed. It is possible to prevent the cooling water cycle 30 and the cooling unit 40 from being damaged due to freezing or corrosion of the cooling water. When the oil is used as the heat medium, a melting point is preferably lower than that of water. Even when an outside air temperature is below a freezing point, the cooling water cycle 30 can be operated.

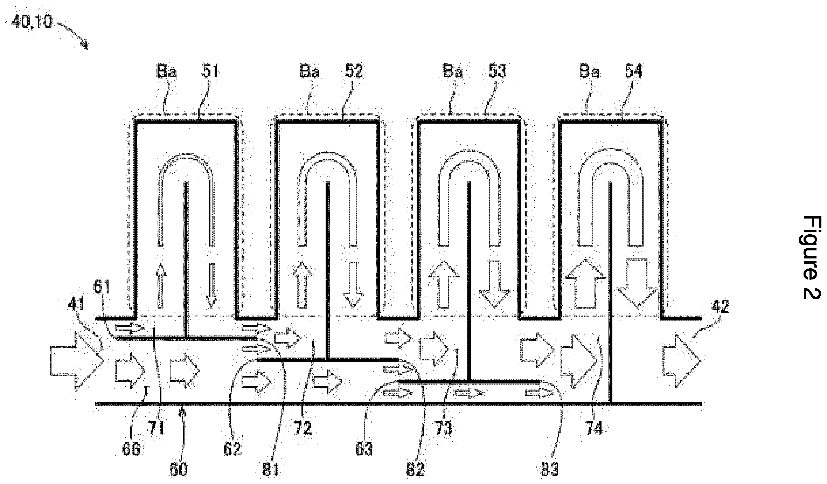

Reference is made to FIG. 2. The cooling unit 40 includes an inlet 41 through which the cooling water flows in from an outside of the cooling unit 40, an outlet 42 through which the cooling water flows out to an outside of the cooling unit 40, four heat exchange portions 51 to 54 disposed between the inlet 41 and the outlet 42 and thermally connected to the battery Ba, and a distribution flow path 60 in which the cooling water flowing in from the inlet 41 flows and which distributes the cooling water to each of the heat exchange portions 51 to 54.

Each component in the cooling unit 40 can be integrally formed by pressing a metal plate. Additionally, the cooling unit 40 can also be formed by connecting a plurality of different components. For example, the heat exchange portions 51 to 54 and the distribution flow path 60 formed with the inlet 41 and the outlet 42 may be manufactured separately and connected to each other. Additionally, the cooling unit 40 is preferably manufactured by pressing an aluminum alloy to form a lower plate and an upper plate, stacking the plates to each other to be in a temporary assembly state, and connecting the plates by a brazing method.

The heat exchange portions 51 to 54 allow the cooling water to flow inside, and outer peripheral surfaces of the heat exchange portions 51 to 54 are in contact with the battery Ba. The heat exchange portions 51 to 54 cool the battery Ba by heat exchange between the cooling water flowing inside and the battery Ba in contact outside.

The heat exchange portions 51 to 54 are disposed in an order of the first heat exchange portion 51, the second heat exchange portion 52, and the third heat exchange portion 53 up to the fourth heat exchange portion 54 from upstream to downstream, with reference to a flow direction of the cooling water.

Here, the first heat exchange portion 51 is disposed adjacent to upstream of the second heat exchange portion 52. The first heat exchange portion 51 may be referred to as an upstream heat exchange portion 51 disposed adjacent to the second heat exchange portion 52 upstream of the second heat exchange portion 52. The second heat exchange portion 52 may be referred to as a downstream heat exchange portion 52 disposed downstream of the upstream heat exchange portion 51 with respect to the first heat exchange portion 51.

Here, an upstream heat exchange portion and a downstream heat exchange portion are relatively determined by positions of the heat exchange portions 51 to 54. The second heat exchange portion 52 may be referred to as an upstream heat exchange portion 52 with respect to the third heat exchange portion 53, and the third heat exchange portion 53 may be referred to as a downstream heat exchange portion 53 with respect to the second heat exchange portion 52. The third heat exchange portion 53 may be referred to as an upstream heat exchange portion 53 with respect to the fourth heat exchange portion 54, and the fourth heat exchange portion 54 may be referred to as a downstream heat exchange portion 54 with respect to the third heat exchange portion 53.

Hereinafter, these heat exchange portions may be collectively referred to as the upstream heat exchange portions 51 to 53 and the downstream heat exchange portions 52 to 54.

The distribution flow path 60 includes a first branch portion 61 that branches a part of the cooling water flowing in from the inlet 41, a first introduction path 71 that flows the cooling water branched at the first branch portion 61 toward the first heat exchange portion 51, a bypass path 66 that bypasses the first heat exchange portion 51, a first join portion 81 at which a part of the heat medium flowing through the bypass path 66 joins with the cooling water flowing through the first heat exchange portion 51 and flows to the second heat exchange portion 52, a second branch portion 62 that branches a part of the cooling water in the bypass path 66 in a vicinity of the first join portion 81, a second introduction path 72 that flows the cooling water branched at the second branch portion 62 toward the second heat exchange portion 52, a second join portion 82 at which a part of the cooling water flowing through the bypass path 66 joins with the cooling water flowing through the second heat exchange portion 52 and flows to the third heat exchange portion 53, a third branch portion 63 that branches a part of the cooling water flowing through the bypass path 66 in a vicinity of the second join portion 82, a third introduction path 73 that flows the cooling water branched at the third branch portion 63 toward the third heat exchange portion 53, a third join portion 83 at which all of the cooling water flowing through the bypass path 66 joins with the cooling water flowing through the third heat exchange portion 53 and flows to the fourth heat exchange portion 54, a fourth introduction path 74 that flows the cooling water joined at the third join portion 83 toward the fourth heat exchange portion 54.

The first to third introduction paths 71 to 73 may be referred to as the introduction paths 71 to 73. The introduction paths 71 to 73 flow a part of the cooling water flowing in from the inlet 41 toward the upstream heat exchange portions 51 to 53. Here, the fourth introduction path 74 flow all of the cooling water flowing in from the inlet 41 toward the fourth heat exchange portion 54 (the downstream heat exchange portion 54), and is different from the introduction paths 71 to 73 in this respect.

The first to third branch portions 61 to 63 may be referred to as the branch portions 61 to 63. The branch portions 61 to 63 branch the cooling water into the introduction paths 71 to 73 and the bypass path 66 that bypasses the upstream heat exchange portions 51 to 53.

The first to third join portions 81 to 83 may be referred to as the join portions 81 to 83. The join portions 81 to 83 join a part or all of the heat medium flowing through the bypass path 66 with the heat medium flowing through the upstream heat exchange portions 51 to 53, and flow the joined heat medium to the downstream heat exchange portions 52 to 54.

An operation of the battery cooling system 10 described above will be described.

Reference is made to FIG. 1. The refrigerant circulates through the refrigeration cycle 20. The refrigerant is compressed in the compressor 21 and discharged in a high-temperature and high-pressure state. The discharged refrigerant is cooled and condensed by heat exchange with the atmosphere when passing through the radiator 22. The refrigerant having passed through the radiator 22 is separated into gas and liquid in the receiver tank 23, and the liquid refrigerant flows into the decompression device 24. In the decompression device 24, the refrigerant is decompressed and brought into a gas-liquid mixture and low-temperature and low-pressure state. The low-temperature and low-pressure refrigerant cools the cooling water by heat exchange with the cooling water when passing through the chiller 13. The refrigerant that cooled the cooling water (the refrigerant heated by the cooling water and turned into a gaseous state) flows from the chiller 13 toward the compressor 21.

Meanwhile, the cooling water circulates through the cooling water cycle 30. The cooling water is pumped by the pump 31 and circulates through the cooling water flow path 33. The cooling water discharged from the pump 31 flows through the chiller 13. When flowing through the chiller 13, the cooling water is cooled by the refrigerant. The cooled cooling water passes through the cooling unit 40. When passing through the cooling unit 40, the cooling water cools the battery Ba by heat exchange with the battery Ba. The cooling water that cooled the battery Ba flows from the cooling unit 40 toward the pump 31.

Next, cooling of the battery Ba in the cooling unit 40 will be described in detail.

Reference is made to FIG. 2. A part of the cooling water flowing in from the inlet 41 is branched at the first branch portion 61 and flows to the first introduction path 71. The cooling water introduced into the first introduction path 71 flows through the first heat exchange portion 51 to cool the battery Ba. The cooling water that has passed through the first heat exchange portion 51 and whose temperature is increased flows toward the second introduction path 72.

In addition to the cooling water that has passed through the first heat exchange portion 51, a part of the cooling water having a low temperature and flowing through the bypass path 66 joins into the second introduction path 72 via the first join portion 81. A part of the cooling water flowing through the bypass path 66 is branched at the second branch portion 62 toward the second introduction path 72. The cooling water introduced into the second introduction path 72 flows through the second heat exchange portion 52 to cool the battery Ba. The cooling water that has passed through the second heat exchange portion 52 and whose temperature is increased flows toward the third introduction path 73.

In addition to the cooling water having passed through the second heat exchange portion 52, a part of the cooling water having a low temperature and flowing through the bypass path 66 joins into the third introduction path 73 via the second join portion 82. A part of the cooling water flowing through the bypass path 66 is branched at the third branch portion 63 toward the third introduction path 73. The cooling water introduced into the third introduction path 73 flows through the third heat exchange portion 53 to cool the battery Ba. The cooling water that has passed through the third heat exchange portion 53 and whose temperature is increased flows toward the fourth introduction path 74.

In addition to the cooling water that has passed through the third heat exchange portion 53, all of the cooling water having a low temperature and flowing through the bypass path 66 joins into the fourth introduction path 74 via the third join portion 83. The cooling water introduced into the fourth introduction path 74 flows through the fourth heat exchange portion 54 to cool the battery Ba. The cooling water that has passed through the fourth heat exchange portion 54 and whose temperature is increased flows out from the outlet 42 to the outside.

Here, a flow rate of the cooling water flowing in from the inlet 41 is Q [L/s], and a temperature of the cooling water is TO [K]. A flow rate of the cooling water introduced into the second to fourth heat exchange portions 52 to 54 will be further described on a premise that a flow rate of the cooling water added to the cooling water having passed through the immediately upstream one of the heat exchange portions 51 to 53 is substantially the same as a flow rate of the cooling water introduced into the first heat exchange portion 51, and that a temperature of the cooling water having passed through each of the heat exchange portions 51 to 54 increases to Ta [K].

When the flow rate of the cooling water flowing in from the inlet 41 is Q [L/s], and the flow rate of the cooling water introduced into the first heat exchange portion 51 is substantially the same as a flow rate of the cooling water distributed from the bypass path 66 and joined into each of the second to fourth heat exchange portions 52 to 54, a flow rate of the cooling water introduced into the first introduction path 71 is Q/4 [L/s]. That is, under the above condition, when the number of heat exchange portions 51 to 54 provided is N, the flow rate of the cooling water introduced into the first introduction path 71 is Q/N [L/s]. At this time, a flow rate of the cooling water branched at the first branch portion 61 and flowing to the bypass path 66 is (3 × Q)/4 [L/s].

Further, when the temperature of the cooling water flowing in from the inlet 41 is TO [K] and a temperature increasing due to heat exchange with the battery Ba (increasing temperature) is t [K], the temperature Ta [K] of the cooling water that has passed through the first heat exchange portion 51 can be expressed by Ta = TO + t. Further, a temperature T1 [K] of the cooling water flowing from the first introduction path 71 into the first heat exchange portion 51 is substantially the same as the temperature TO [K] of the cooling water flowing in from the inlet 41.

As described above, a flow rate of the cooling water that joins at the first join portion 81 is substantially the same as the flow rate of the cooling water that has passed through the first heat exchange portion 51. A flow rate of the cooling water introduced into the second introduction path 72 is (2 × Q) /4 = Q/2 [L/s] obtained by adding the flow rate Q/4 [L/s] from the bypass path 66 to the flow rate Q/4 [L/s] having passed through the first heat exchange portion 51. Under the above condition, when the number of heat exchange portions 51 to 54 provided is N, the flow rate of the cooling water in the second introduction path 72 is (2 × Q)/N [L/s]. A flow rate of the cooling water branched at the second branch portion 62 and flowing into the bypass path 66 is Q/2 [L/s].

A temperature T2 [K] of the cooling water that joins at the first join portion 81 and is introduced into the second introduction path 72 can be expressed as follows. The cooling water that has passed through the first heat exchange portion 51 has the flow rate of Q/4 [L/s] and the temperature of Ta (= TO + t). However, the cooling water joined from the bypass path 66 has the flow rate of Q/4 [L/s], and the temperature of TO. Therefore, the temperature T2 of the cooling water introduced into the second introduction path 72 can be expressed by T2 = (1/2) × Ta + (1/2) × TO. Here, since Ta = TO + t, T2 = (1/2) × (TO + t) + (1/2) × TO = TO + t/2 [K].

As described above, it can be said that compared to the cooling water flowing into the first heat exchange portion 51, the cooling water flowing into the second heat exchange portion 52 increases in temperature by t/2 [K] and increases in flow rate by Q/4 [L/s].

As in a case of the second introduction path 72, a flow rate of the cooling water introduced into the third introduction path 73 increases by Q/4 [L/s] from the flow rate of the cooling water that has passed through the second heat exchange portion 52, and is 3Q/4 [L/s] . When the number of the heat exchange portions 51 to 54 provided is N, the flow rate of the cooling water in the third introduction path 73 is (3 × Q)/N [L/s] . A flow rate of the cooling water branched at the third branch portion 63 and flowing into the bypass path 66 is Q/4 [L/s].

A temperature T3 [K] of the cooling water that joins at the second join portion 82 and is introduced into the third introduction path 73 can be expressed as follows. The cooling water that has passed through the second heat exchange portion 52 has a flow rate of Q/2 [L/s] and a temperature of Ta (= TO + t). However, the cooling water joined from the bypass path 66 has the flow rate of Q/4 [L/s], and the temperature of TO. Therefore, the temperature T3 of the cooling water introduced into the third introduction path 73 can be expressed by T3 = (2/3) × Ta + (1/3) × TO. Here, since Ta = TO + t, T3 = (2/3) × (TO + t) + (1/3) × TO = TO + (2/3)t [K] .

As described above, it can be said that compared to the cooling water flowing into the second heat exchange portion 52, the cooling water flowing into the third heat exchange portion 53 increases in temperature by t/6 [K] and increases in flow rate by Q/4 [L/s].

Next, a flow rate of the cooling water introduced into the fourth introduction path 74 is Q [L/s]. When the number of heat exchange portions 51 to 54 provided is N, the flow rate of the cooling water in the fourth introduction path 74 (Nth introduction path 74) is Q [L/s]. That is, the flow rate is the same as a flow rate of the cooling water at the inlet 41.

A temperature T4 [K] of the cooling water that joins at the third join portion 83 and is introduced into the fourth introduction path 74 can be expressed as follows. The cooling water that has passed through the third heat exchange portion 53 has a flow rate of 3Q/4 [L/s] and a temperature of Ta (= TO + t). However, the cooling water joined from the bypass path 66 has the flow rate of Q/4 [L/s], and the temperature of TO. Therefore, the temperature T4 of the cooling water introduced into the fourth introduction path 74 can be expressed by T4 = (3/4) × Ta + (1/4) × TO. Here, since Ta = TO + t, T4 = (3/4) × (TO + t) + (1/4) × TO = TO + (3/4) t [K].

As described above, it can be said that compared to the cooling water flowing into the third heat exchange portion 53, the cooling water flowing into the fourth heat exchange portion 54 increases in temperature by t/12 [K] and increases in flow rate by Q/4 [L/s].

The battery cooling unit 40 introduces the cooling water into the second to fourth heat exchange portions 52 to 54 after joining the cooling water having substantially the same temperature as the temperature of the cooling water at the inlet 41. Therefore, the cooling water having cooling performance can be reliably supplied to all the heat exchange portions 51 to 54. Further, the cooling water flowing into each of the heat exchange portions 51 to 54 increases in temperature and increases in flow rate at the time of flowing in as the cooling water flows toward the downstream. That is, although the cooling water flowing into the downstream heat exchange portion (for example, the fourth heat exchange portion 54) has a relatively higher temperature than the cooling water flowing into the upstream heat exchange portion (for example, the third heat exchange portion 53), the battery Ba can be sufficiently cooled by increasing the flow rate of the cooling water.

Further, although the cooling water flowing into the upstream heat exchange portion (for example, the first heat exchange portion 51) has a relatively smaller flow rate than the cooling water flowing into the downstream heat exchange portion (for example, the second heat exchange portion 52), the battery Ba can be sufficiently cooled because there is little or no increase in temperature. Therefore, the battery Ba can be sufficiently and uniformly cooled in all the heat exchange portions from upstream to downstream.

The cooling unit 40 described above will be summarized.

The cooling unit 40 includes the inlet 41, the outlet 42, the plurality of heat exchange portions 51 to 54 thermally connected to the battery Ba, and the distribution flow path 60 that distributes the heat medium flowing in from the inlet 41 to the plurality of heat exchange portions 51 to 54.

When the number of heat exchange portions 51 to 54 provided is four (N), the heat exchange portions 51 to 54 are disposed in an order of the first heat exchange portion 51 and the second heat exchange portion 52 up to the fourth heat exchange portion 54 (the Nth heat exchange portion 54) from upstream to downstream, with reference to the flow direction of the cooling water.

The distribution flow path 60 includes the first branch portion 61 that branches the flow path into the first introduction path 71 and the bypass path 66. Further, the distribution flow path 60 includes the three (N - 1) join portions 81 to 83 from the first join portion 81, at which a part of the heat medium flowing through the bypass path 66 joins with the cooling water flowing through the first heat exchange portion 51 and flows to the second heat exchange portion 52, to the third join portion 83 (the (N-1)th join portion 83), at which all of the cooling water flowing through the bypass path 66 joins with the cooling water flowing through the third heat exchange portion 53 (the (N-1)th heat exchange portion 53) and flows to the fourth heat exchange portion 54 (the Nth heat exchange portion 54).

Further, the distribution flow path 60 includes the branch portions 61 to 63 that branch into the introduction paths 71 to 73 through which a part of the cooling water flowing in from the inlet 41 flows toward the upstream heat exchange portions 51 to 53 and the bypass path 66 that bypasses the upstream heat exchange portions 51 to 53. Further, the distribution flow path 60 includes the join portions 81 to 83 at which a part or all of the cooling water flowing through the bypass path 66 joins with the cooling water flowing through the upstream heat exchange portions 51 to 53 and flows to the downstream heat exchange portions 52 to 54.

The cooling unit 40 described above has the following effects.

The cooling unit 40 includes the distribution flow path 60 that distributes the cooling water flowing in from the inlet 41 to the plurality of heat exchange portions 51 to 54. Specifically, the cooling water flowing in from the inlet 41 is distributed by the branch portions 61 to 63, a part of the cooling water flows toward the upstream heat exchange portions 51 to 53 through the introduction paths 71 to 73, and the remaining cooling water flows to downstream of the upstream heat exchange portions 51 to 53 through the bypass path 66. When a heat medium having high cooling performance flows to the upstream heat exchange portions 51 to 53, cooling water having high cooling performance joins with cooling water having decreased cooling performance that has passed through the upstream heat exchange portions 51 to 53, and flows to the downstream heat exchange portions 52 to 54. The cooling performance on upstream and downstream can be made uniform as compared with a case in which an entire amount of the cooling water flows in series to the upstream heat exchange portions 51 to 53 and the downstream heat exchange portions 52 to 54.

Reference is also made to FIG. 1. The cooling unit 40 uses cooling water as a heat medium, and is preferably used as a part of the battery cooling system 10 combined with the refrigeration cycle 20. Flowing liquid cooling water facilitates distribution of the cooling water to the introduction paths 71 to 73 and the bypass path 66 in the distribution flow path 60 at an intended ratio. Further, by combining the cooling water cycle 30 including the cooling unit 40 with the refrigeration cycle 20 via the chiller 13, heat energy recovered from the battery Ba can be discharged from the radiator 22 of the refrigeration cycle 20 to the outside of the cooling system.

The flow rate of the cooling water having high cooling performance (a low temperature) applied from the first heat exchange portion 51 to the fourth heat exchange portion 54 (the Nth heat exchange portion 54) remains the same. The entire battery Ba and/or each of the plurality of batteries Ba can be cooled more uniformly.

### <Embodiment 2>

Next, a cooling unit 40A according to Embodiment 2 will be described with reference to the drawings. A basic configuration of the cooling unit 40A is the same as that of the cooling unit 40 (refer to FIG. 2) according to Embodiment 1. Parts common to Embodiment 1 are denoted by the same reference numerals, and detailed description thereof will be omitted.

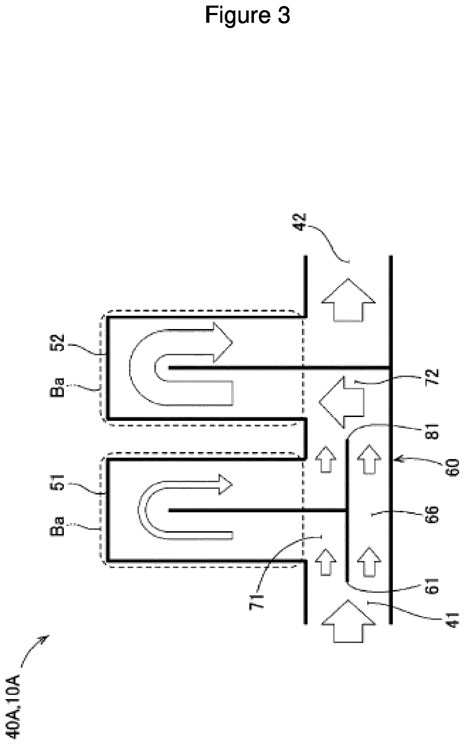

Reference is made to FIG. 3. The cooling unit 40A includes two heat exchange portions 51 and 52. In this case, the first heat exchange portion 51 is the upstream heat exchange portion 51, and the second heat exchange portion 52 is the downstream heat exchange portion 52.

The first branch portion 61 branches the flow path into the first introduction path 71 through which a part of the cooling water flowing in from the inlet 41 flows toward the upstream heat exchange portion 51 and the bypass path 66 that bypasses the upstream heat exchange portion 51.

At the first join portion 81, all of the cooling water flowing through the bypass path 66 joins with the cooling water flowing through the upstream heat exchange portion 51 and flows to the downstream heat exchange portion 52.

The cooling unit 40A described above and a battery cooling system 10A equipped with the cooling unit 40A also achieve the predetermined effects of the invention.

### <Embodiment 3>

Next, a cooling unit 40B according to Embodiment 3 will be described with reference to the drawings. A basic configuration of the cooling unit 40B is the same as that of the cooling unit 40 (refer to FIG. 2) according to Embodiment 1. Parts common to Embodiment 1 are denoted by the same reference numerals, and detailed description thereof will be omitted.

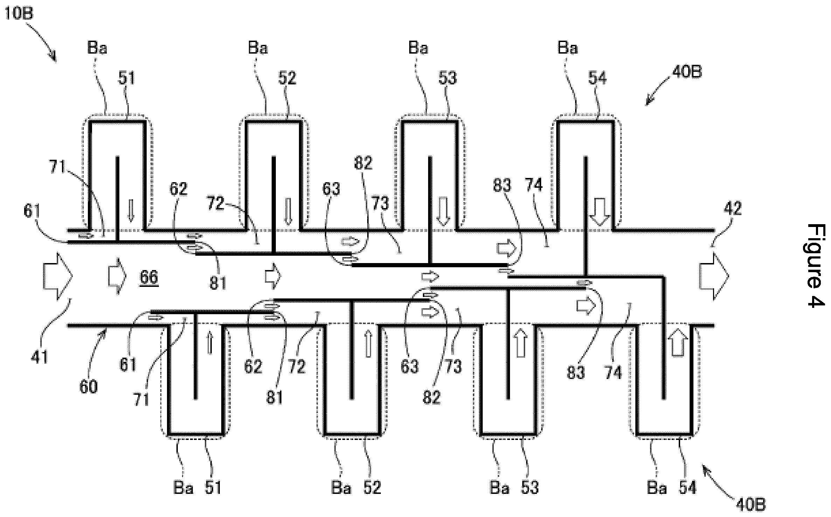

Reference is made to FIG. 4. In a battery cooling system 10B, two cooling units 40B are integrally provided and face each other. These cooling units 40B share the inlet 41, the outlet 42, and the distribution flow path 60.

Each of the two cooling units 40B includes four heat exchange portions 51 to 54. With reference to the flow direction of the cooling water, in the heat exchange portions 51 to 54, the corresponding heat exchange portions 51 to 54 are offset by each other, and the heat exchange portions 51 to 54 of each set are alternately disposed.

The cooling unit 40B described above and the battery cooling system 10B equipped with the cooling unit 40B also achieve the predetermined effects of the invention.

### <Embodiment 4>

Next, a cooling unit 40C according to Embodiment 4 will be described with reference to the drawings. A basic configuration of the cooling unit 40C is the same as that of the cooling unit 40B (refer to FIG. 4) according to Embodiment 3. Parts common to Embodiment 1 and/or Embodiment 3 are denoted by the same reference numerals, and detailed description thereof will be omitted.

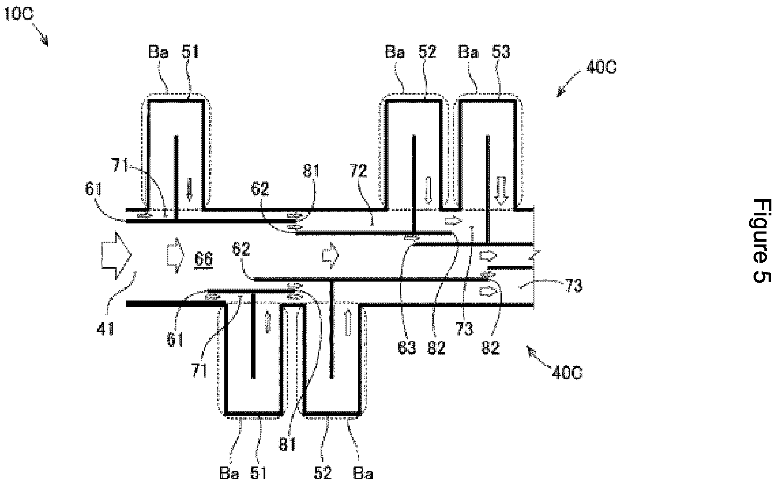

Reference is made to FIG. 5. Also, in a battery cooling system 10C, two cooling units 40C are integrally provided and face each other. These cooling units 40C share the inlet 41, the outlet 42, and the distribution flow path 60.

With reference to the flow direction of the cooling water, in the heat exchange portions 51 to 53, the corresponding heat exchange portions 51 to 53 are offset by each other. Meanwhile, the heat exchange portions 51 to 53 of each set are not alternately disposed. That is, a portion where one set of heat exchange portions 51 and 52 are disposed in succession is provided.

The cooling unit 40C described above and the battery cooling system 10C equipped with the cooling unit 40C also achieve the predetermined effects of the invention.

### <Embodiment 5>

Next, a cooling unit 40D according to Embodiment 5 will be described with reference to the drawings. A basic configuration of the cooling unit 40D is the same as that of the cooling unit 40 (refer to FIG. 2) according to Embodiment 1. Parts common to Embodiment 1 are denoted by the same reference numerals, and detailed description thereof will be omitted.

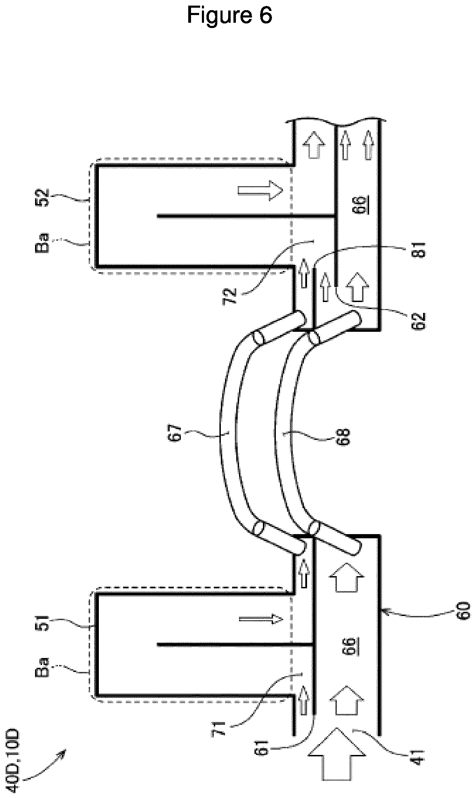

Reference is made to FIG. 6. The cooling unit 40D may include a plurality of components. More specifically, tubular connection pipes 67 and 68 that connect a plurality of components in a flowable manner constitute a part of a distribution flow path 60D.

The cooling unit 40D described above and a battery cooling system 10D equipped with the cooling unit 40D also achieve the predetermined effects of the invention.

Further, a cooling unit is not limited to being mounted on a hybrid vehicle, and may be mounted on an electric vehicle, a saddle type vehicle using a motor, other types of vehicles, a construction machine, or the like.

Further, when a refrigerant is used as a heat medium, the cooling unit may be directly disposed on the refrigeration cycle. Further, the cooling unit may be independently provided without sharing a part of an air conditioner.

In addition, although the cooling unit is described using the examples in which two and four heat exchange portions are provided, the number of heat exchange portions may be any number as long as a plurality of heat exchange portions are provided. That is, three or five or more heat exchange portions may be provided.

Further, the cooling unit may be disposed not only on a lower surface of the battery Ba but also on a side surface or an upper surface. In addition, one surface or a plurality of surfaces of the battery may be cooled using a plurality of cooling units.

Further, in the cooling unit, the flow rate of the cooling water introduced into the downstream heat exchange portions 52 to 54 is described as a case in which the flow rate of the cooling water added to the cooling water having passed through the immediately upstream one of the heat exchange portions 51 to 53 is substantially the same as the flow rate of the cooling water introduced into the first heat exchange portion 51. Alternatively, the flow rate of the increased cooling water may be varied. For example, when a heat generation amount of the battery Ba to which the fourth heat exchange portion 54 corresponds is set to be larger than a heat generation amount of the battery Ba to which the other heat exchange portions 51 to 53 correspond, the flow rate of the cooling water flowing through the fourth heat exchange portion 54 that is larger than the flow rate of the cooling water having passed through the third heat exchange portion 53 is preferably set to be larger than the flow rate of the cooling water introduced into the first heat exchange portion 51, the flow rate of the cooling water distributed from the bypass path 66 and introduced into the second heat exchange portion 52, and the flow rate of the cooling water distributed from the bypass path 66 and introduced into the third heat exchange portion 53. In this way, by increasing the flow rate of the cooling water (the cooling water having high cooling performance without an increase in temperature) flowing through the bypass path 66 and introduced into the fourth heat exchange portion 54, the cooling water flowing through the fourth heat exchanging portion 54 can ensure the cooling performance for the battery Ba which generates a large amount of heat and uniformly cool the entire battery Ba.

The invention is not limited to the embodiments as long as operations and effects of the invention are achieved.

### Industrial Applicability

The cooling unit of the invention is suitable for cooling a battery used in a vehicle.

### Reference Signs List

10, 10A, 10B, 10C, 10D: battery cooling system
13: chiller
20: refrigeration cycle
21: compressor
22: radiator
24: decompression device
30: cooling water cycle
31: pump
40, 40A, 40B, 40C, 40D: battery cooling unit
41: inlet
42: outlet
51: first heat exchange portion (upstream heat exchange portion)
52: second heat exchange portion (downstream heat exchange portion, upstream heat exchange portion)
53: third heat exchange portion (downstream heat exchange portion, upstream heat exchange portion)
54: fourth heat exchange portion (downstream heat exchange portion, Nth heat exchange portion)
60: distribution flow path
61: first branch portion (branch portion)
62: second branch portion (branch portion)
63: third branch portion (branch portion)
66: bypass path
71: first introduction path (introduction path)
72: second introduction path (introduction path)
73: third introduction path (introduction path)
81: first join portion (join portion)
82: second join portion (join portion)
83: third join portion (join portion)
Ba: battery

## Claims

1. A battery cooling unit (40; 40A; 40B; 40C; 40D) capable of cooling a battery (Ba) by a heat medium, the battery cooling unit (40; 40A; 40B; 40C; 40D) comprising:
an inlet (41) through which the heat medium flows in from an outside of the battery cooling unit (40; 40A; 40B; 40C; 40D);
an outlet (42) through which the heat medium flows out to the outside of the battery cooling unit (40; 40A; 40B; 40C; 40D);
a plurality of heat exchange portions (51 to 54) thermally connected to the battery (Ba); and
a distribution flow path (60) configured to distribute the heat medium flowing in from the inlet (41) to the plurality of heat exchange portions (51 to 54), wherein
when any two of the heat exchange portions (51 to 54) among the heat exchange portions (51 to 54) are defined as an upstream heat exchange portion (51 to 53) and a downstream heat exchange portion (52 to 54) disposed downstream of the upstream heat exchange portion (51 to 53), with reference to a flow direction of the heat medium,
the distribution flow path (60) includes
a branch portion (61 to 63) configured to branch into an introduction path (71 to 73) through which a part of the heat medium flowing in from the inlet (41) flows toward the upstream heat exchange portions (51 to 53) and a bypass path (66) that bypasses the upstream heat exchange portions (51 to 53), and
a join portion (81 to 83) configured to join a part or all of the heat medium flowing through the bypass path (66) with the heat medium flowing through the upstream heat exchange portions (51 to 53) and flow the joined heat medium to the downstream heat exchange portions (52 to 54).

2. A battery cooling unit (40; 40B; 40C) capable of cooling a battery (Ba) by a heat medium, the battery cooling unit (40; 40B; 40C) comprising:
an inlet (41) through which a heat medium flows in from an outside of the battery cooling unit (40; 40B; 40C);
an outlet (42) through which the heat medium flows out to the outside of the battery cooling unit (40; 40B; 40C); and
a distribution flow path (60) configured to distribute to a plurality of heat exchange portions (51 to 54) thermally connected to the battery (Ba), wherein
when the number of heat exchange portions (51 to 54) provided is N, the first heat exchange portion (51) and the second heat exchange portion (52) up to the Nth heat exchange portion (54) are disposed in an order from upstream to downstream, with reference to a flow direction of the heat medium,
the distribution flow path (60) includes
a first branch portion (61 to 63) configured to branch into a first introduction path (71 to 73) through which a part of the heat medium flowing in from the inlet (41) flows toward the first heat exchange portion (51) and a bypass path (66) that bypasses the first heat exchange portion (51), and
(N-1) join portions (81 to 83) from the first join portion (81), the first join portion (81) being configured to join a part of the heat medium flowing through the bypass path (66) with the heat medium flowing through the first heat exchange portion (51) and flow the joined heat medium to the second heat exchange portion (52), to the (N-1)th join portion (83), the (N-1)th join portion (83) being configured to join all of the heat medium flowing through the bypass path (66) with the heat medium flowing through the (N-1)th heat exchange portion (53) and flow the joined heat medium to the Nth heat exchange portion (54).

3. The battery cooling unit (40; 40B; 40C) according to claim 2, wherein
an amount of the heat medium introduced from the first introduction path (71 to 73) to the first heat exchange portion (51) is substantially the same as an amount of the heat medium distributed from the bypass path (66) and joined to each of the heat exchange portions (52 to 54) from the second heat exchange portion (52) to the Nth heat exchange portion (54).

4. A battery cooling system (10) on which the battery cooling unit (40; 40A; 40B; 40C; 40D) according to any one of claims 1 to 3 is mounted, the battery cooling system (10) comprising:
a refrigeration cycle (20) in which a refrigerant circulates;
a cooling water cycle (30) which is thermally coupled to the refrigeration cycle (20) and in which cooling water circulates; and
a chiller (13) which is thermally coupled the refrigeration cycle (20) and the cooling water cycle (30) and configured to perform heat exchange between the refrigerant and the cooling water, wherein
the refrigeration cycle (20) includes
a compressor (21) configured to compress and discharge the refrigerant heated in the chiller (13),
a radiator (22) configured to radiate heat from the refrigerant discharged from the compressor (21), and
a decompression device (24) configured to decompress the refrigerant flowing out from the radiator (22), and
the cooling water cycle (30) includes
a pump (31) configured to pump the cooling water, and
the battery cooling unit (40; 40A; 40B; 40C; 40D) into which water cooled in the chiller (13) flows to cool the battery (Ba).
